# EUROPEAN PATENT SPECIFICATION

(11) **EP 3 645 349 B1**
(45) Date of publication and mention of the grant of the patent: **27.10.2021**
(21) Application number: 18734195.3
(22) Date of filing: 25.06.2018
(51) Int. Cl.: B60S 1/48, B60S 1/52

(54) **HEATABLE FLUID CHAMBER ASSEMBLY AND METHOD OF MANUFACTURING SAME**
BEHEIZBARE FLUIDKAMMERANORDNUNG UND VERFAHREN ZU IHRER HERSTELLUNG
ENSEMBLE CHAMBRE À FLUIDE CHAUFFABLE ET SON PROCÉDÉ DE FABRICATION

(30) Priority: 30.06.2017 DE 102017114607
(43) Date of publication of application: 06.05.2020
(73) Proprietor: A. Raymond et Cie. SCS, 38000 Grenoble (FR)
(72) Inventor: BODE, Karl, 79540 Lörrach (DE)
(74) Representative: Grünecker Patent- und Rechtsanwälte PartG mbB
(86) International application number: PCT/EP2018/066914
(87) International publication number: WO 2019/002185

(56) References cited:
- EP-A2- 2 078 647
- WO-A1-2018/057376
- DE-A1- 19 913 193
- DE-A1-102008 051 584
- DE-A1-102012 100 880

## Description

The invention refers to a heatable fluid chamber assembly according to the generic portion of claim 1 and to a method for its manufacture according to the generic portion of claim 9.

Heatable fluid chamber assemblies are known from practice. Such heatable fluid chamber assemblies may be provided in window or headlamp washing systems of motor vehicles in order to prevent the washing fluid from freezing or to melt ice already formed. For example, EP 2 078 647 A2 discloses a vehicle window and/or headlight washing system comprising a nozzle heated by a heating cable. The heating cable should be laid in the nozzle in the form of a meander.

While a meander-shaped arrangement of the heating cable improves the heating capacity in the nozzle, the meander-shaped laying is technically difficult to realize in production. It is therefore an object of the invention to provide a heatable fluid chamber assembly which, through simple adaptations, improves the heating performance and at the same time allows for simple production.

According to the invention, this object is solved by a heatable fluid chamber assembly having the features of claim 1 and by a method for its manufacture having the features of claim 9.

The heatable fluid chamber assembly for a window or headlight washing system of a vehicle according to the invention comprises a fluid chamber with a first fluid port and a heating line which is arranged in the fluid chamber and preferably in the first fluid port. It is characterised by a rotary disk which is rotatably arranged on or in the fluid chamber about an axis and has a displacement element which extends into the fluid chamber, a portion of the heating line being displaceable by the deflector during rotation of the rotary disk. The first fluid port extends radially to the axis. By shifting by turning the rotary disk, the heating line can be given a desired shape or course. Turning can be done much easier than, for example, manually laying a heating cable in the form of a meander as known from the state of the art. A displacement element, which may be synonymously referred to as a deflector, may be, for example, a projection, a cam or a pin, preferably extending from the rotary disk into the fluid chamber and having an opening and/or a channel extending through it.

It is advantageous if the fluid chamber does not have any projecting structure mounted or fixed to the center of its inside around which the heating line could laid or wrapped. Preferably, there is no such structure mounted or fixed anywhere on the inside of the fluid chamber.

In another variant, a second fluid port is provided at the fluid chamber. The heating line can run through the second fluid port. This can be advantageous, for example, in window or headlamp washing systems where several heatable fluid chamber assemblies are provided. In this way, the heating line can run successively through several fluid chamber assemblies.

Preferably, the deflector in a first rotary position of the rotary disk can allow a preferably straight line of the heating line from the first fluid port to the second fluid port and through the fluid chamber. This allows the heating line to be guided through the finished fluid chamber assembly. This can support a simplification of production. It is also conceivable that the deflector is designed in such a way that a section of the heating line can already be displaced in and/or through the fluid chamber, e.g. in the direction of the axis. Advantageously, such displacement can be ensured through the aforementioned channel, which can extend through the deflector, for example by placing the channel in the first rotary position at an angle greater than 0° to the first and/or second fluid port. This is particularly useful if the first and second fluid ports are not collinear and/or if the first and/or second fluid ports are not radial to the axis.

For example, in cases where only a first fluid port is provided, it is conceivable that the deflector in a first rotary position of the rotary disk permits a preferably straight line of the heating line into the fluid chamber. Even in cases where only a first fluid port is provided, the deflector can be designed in such a way that a section of the heating line can already be displaced when it is inserted into the fluid chamber, e.g. in the direction of the axis. Advantageously, such displacement can be ensured through the aforementioned channel, which can extend through the deflector, for example by the channel being arranged at an angle greater than 0° to the first fluid port in the first rotational position.

In a further variant, a nozzle device and/or a check valve can be provided in the fluid chamber. These components can ensure a function of the fluid chamber assembly as a nozzle, e.g. in a window or headlight washing system of a vehicle. It may therefore be particularly desirable to place the section of the heating line near the nozzle device and/or the check valve, in particular to keep these components ice-free.

It is advantageous if the rotary disk has a second deflector in addition to the deflector, which extends into the fluid chamber and is preferably arranged eccentrically on the rotary disk with respect to the axis. This can simplify and/or improve the relocation of the section of the heating line. It is particularly advantageous if the second deflector is located on a side of the heating line opposite the deflector. It can also be advantageous if the heating line runs between the deflector and the second deflector. Such configurations can make it possible to specifically influence the direction and/or extent of the displacement.

It is conceivable that the deflector is arranged in a second rotary position in the area of the nozzle device and/or the check valve. In this way it can be achieved that the heating line is also brought into the area of the nozzle device and/or the check valve with the deflector. As a result, the heat input can also be directed in this direction.

It is also conceivable that the deflector has a pressing surface which presses the heating line against the nozzle device and/or against the check valve when the rotary disk is rotated. This ensures a particularly efficient heat transfer.

In another advantageous variant, a transition area between the fluid chamber and the first fluid port and/or a transition area between the fluid chamber and the second fluid port may have a heat protector. This can be advantageous in situations where the heating line comes into contact with or near the respective transition areas due to the relocation. This prevents heat damage or even leaks at the transition areas.

In a further variant, the heating line can run in a displaced state in a plane that is linearly independent of a direction vector of the axis, the direction vector preferably running perpendicular to the plane. The fact that the plane is linear independent of the direction vector of the axis can mean that the plane is spanned by two vectors and these vectors and the direction vector of the axis are linear independent of each other.

It can be advantageous if the first fluid port and the second fluid port are collinear to each other. Preferably both the first and the second fluid port extend radially to the axis. Collinear fluid ports enable particularly easy guiding of the heating line through both fluid ports and the fluid chamber. If these run additionally radially to the axis, displacement can also be facilitated by turning the rotary disk.

Furthermore, it can be advantageous if the section of the heating line can be displaced by the rotation of the rotary disk in a direction that is essentially parallel to the axis. Such a further variant of displacement allows the heating line to be positioned even more flexibly in the fluid chamber.

It is particularly advantageous if the section of the heating line can be displaced in three dimensions by rotating the rotary disk. It is also particularly advantageous if the deflector is configured for winding up the heating line. In this way, an especially long section of the heating line can be arranged in the fluid chamber in a particularly space-saving manner.

The invention also refers to a window or headlamp washing system for a vehicle, which is characterised by a fluid chamber assembly of the type described above. Furthermore, the invention refers to a vehicle which includes such a window or headlamp washing system.

The invention also refers to a method of manufacturing a heatable fluid chamber assembly for a window or headlight washing system of a vehicle. This comprises the following method steps:

Providing a fluid chamber with a first fluid port and guiding a heating line through the first fluid port into the fluid chamber. The method is characterized by displacing a section of the heating line by rotating a rotary disk arranged on or in the fluid chamber to be rotatable about an axis. Displacing the heating line through the rotary disk can make it easier to guide the heating line through the fluid chamber and the first fluid port compared to the state of the art, since in the latter, a meander-shaped course of the heating line must already be created while it is being guided through the fluid chamber.

In one variant, a section of the heating line can be moved into and/or through the fluid chamber while it is being guided. As already described above, this can be ensured by a channel in a deflector of the rotary disk. The relevant explanations with reference to the fluid chamber assembly according to the invention also apply accordingly to the method according to the invention for their production.

The fluid chamber can have a second fluid port here as well. It is conceivable that the method may also include guiding the heating line through the fluid chamber and preferably through the second fluid port.

The fluid chamber can have a nozzle device and/or a check valve. It is advantageous if the method involves displacing the section of the heating line towards a nozzle device and/or a check valve. In this way, the heat input can be concentrated specifically on these components, which in some designs can be particularly susceptible to ice formation.

In a further variant, displacing the section of the heating line can cause the section to come into contact with the nozzle device and/or the check valve. This can further improve heat transfer.

It is advantageous if a deflector arranged on the rotary disk is brought into engagement with the heating line by turning the rotary disk. A displacement element, which can also be called a deflector, can e. g. be a projection, a cam or a pin with an opening, which preferably extends from the rotary disk into the fluid chamber.

It is particularly advantageous if several, preferably two, deflectors arranged on the rotary disk are brought into engagement with the heating line by rotating the rotary disk. The deflectors can preferably be brought into engagement with the heating line from at least two opposite sides of the heating line. In this way, the displacement of the heating line can be influenced even more specifically.

In a further variant, the method may include rotating the rotary disk by an angle greater than 180°, preferably greater than 360°. Furthermore, the method may preferably include winding the heating line around the deflector. These two variants may allow for a particularly space-saving arrangement of an especially long section of the heating line within the fluid chamber.

It is conceivable that the method involves displacing the section of the heating line in a direction that is essentially parallel to the axis. In addition, it is conceivable that the heating line section could be displaced in three dimensions. This creates flexibility options that enable a further increase in the number of arrangement variations for the heating line.

The invention relates to fluid chamber assemblies of the type described above, window or headlamp washing systems for a vehicle comprising them and vehicles equipped with such a window and headlamp washing system. Furthermore, the invention refers to methods for the manufacture of such fluid chamber assemblies. Advantageous embodiments are explained in more detail below using drawings.
- Fig. 1: shows an exploded representation of the components of an inventive fluid chamber assembly in perspective view.
- Fig. 2: shows a sectional view of the assembled fluid chamber assembly in the perspective indicated in Figure 1 with the sectional line A-A. A heating line is inserted into the fluid chamber through a first fluid port.
- Fig. 3: shows the view from Fig. 2, but here the heating line is guided through the fluid chamber and through a second fluid port. The rotary disk has been turned clockwise.
- Fig. 4: shows the view from Figs. 2 and 3. In comparison to Fig. 3 the rotary disk has been turned further clockwise, which displaced the heating line.
- Fig. 5: shows the view from Figs. 2 to 4: The rotary disk has been turned so far that the heating line is arranged in the area of a nozzle device and in the area of a check valve.
- Figs. 6a to d: show perspective views of the fluid chamber assembly at different stages of the manufacturing process.
- Fig. 7a and b: show another embodiment of a deflector.
- Fig. 8: shows a schematic plan view of an alternative fluid chamber assembly with a deflector from Fig. 7a and 7b.
- Fig. 9: shows a schematic, perspective view of a deflector from Fig. 7a and 7b in an alternative second rotary position.
- Fig. 10: shows a schematic sectional view of a deflector according to another embodiment.

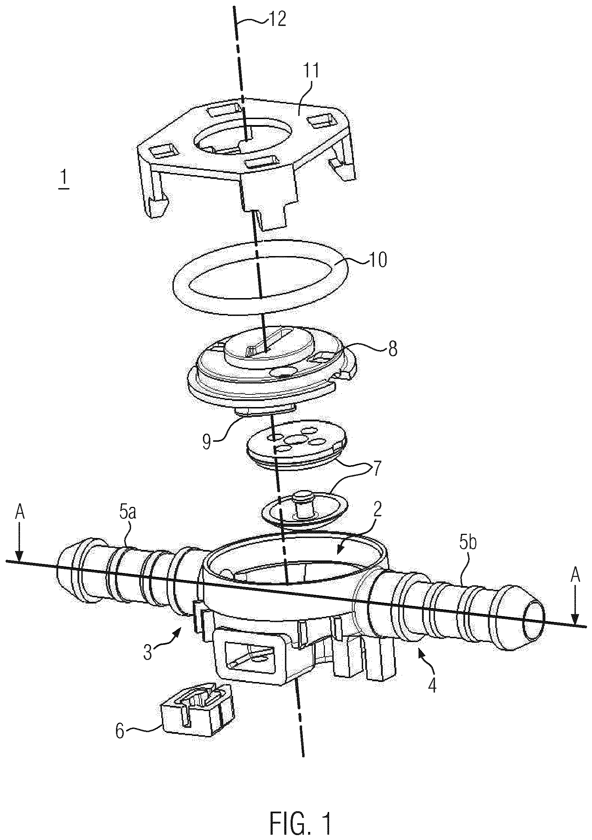

Figure 1 shows components of a fluid chamber assembly 1 in exploded view. The fluid chamber assembly 1 comprises a fluid chamber 2, which in this embodiment is cylindrically shaped. However, it can have any suitable shape. A first fluid port 3 and a second fluid port 4 are provided at the fluid chamber. However, fluid chambers 2 or fluid chamber assemblies 1 with only one, first fluid port 3 are also conceivable. In this embodiment, the first and second fluid ports 3, 4 each have a connection device 5a, 5b. However, fluid ports 3, 4 may take any suitable shape suitable for introducing fluid into fluid chamber 2. Simple inlet openings are also conceivable. In this embodiment, the fluid chamber arrangement 1 has a nozzle device 6 and a check valve 7. However, the invention also covers fluid chamber assemblies 1 which have a nozzle device 6, which have a check valve 7 or which have neither of the two components.

The fluid chamber assembly 1 also includes a rotary disk 8. This rotary disk comprises a deflector 9. In this embodiment, the deflector 9 is embodied as projection 9. In this embodiment, the fluid chamber assembly 1 has a seal 10 and a fastening element 11. In this embodiment, the seal 10 and the fastening element 11 are used to arrange the rotary disk 8 rotatably on the fluid chamber 2. However, any other suitable way of attaching the rotary disk 8 to the fluid chamber 2 is also conceivable. The rotary disk 8 can be rotated about an axis 12. The rotary disk 8 may in particular be rotationally symmetrical to axis 12. If, as in the embodiment, a cylindrical fluid chamber 2 is provided, this can also be rotationally symmetrical to axis 12.

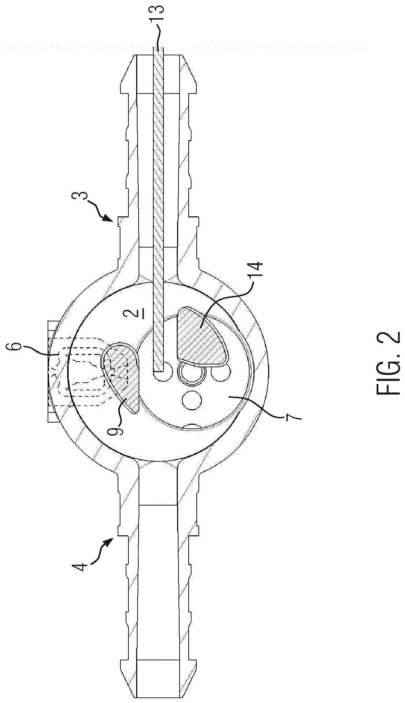

The line A-A in Figure 1 indicates a sectional plane. It passes through the fluid ports 3, 4 and the fluid chamber 2, runs below the rotary disk 8 and intersects the deflector 9; a sectional view from the perspective of the arrows is shown in Figure 2.

Since the sectional plane runs below the rotary disk 8, the latter cannot be seen in Figure 2. It can be seen, however, that in Figure 2 a heating line 13 was guided through the first fluid port 3 and into the fluid chamber 2. Furthermore, a second deflector 14 can be seen, which also extends from the rotary disk 8 into the fluid chamber 2. Figure 2 shows a configuration in which the rotary disk 8 is arranged in a first rotary position. In the first rotary position, the deflector 9 is arranged in such a way that the heating line 13 can run in a straight line through the fluid chamber 2. In the present embodiment, the second deflector 14 is also arranged in such a way that the heating line 13 can run in a straight line through the fluid chamber 2. In particular, the heating line can run straight from the first fluid port 3 through the fluid chamber 2 to the second fluid port 4.

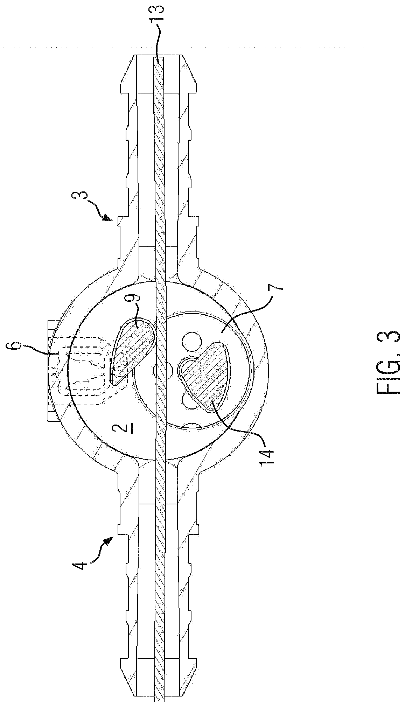

Figure 3 shows the view from Figure 2: In this view, heating line 13 was also guided through the second fluid port 4, so that it now runs through the first and second fluid ports 3, 4 and the fluid chamber 2. In addition, the rotary disk 8 was rotated about axis 12. The direction of rotation is clockwise in the view of Figure 3. However, it is also conceivable that the direction of rotation is counterclockwise. In any case, the rotary disk is rotated in the direction towards a second rotary position, which will be explained in more detail later.

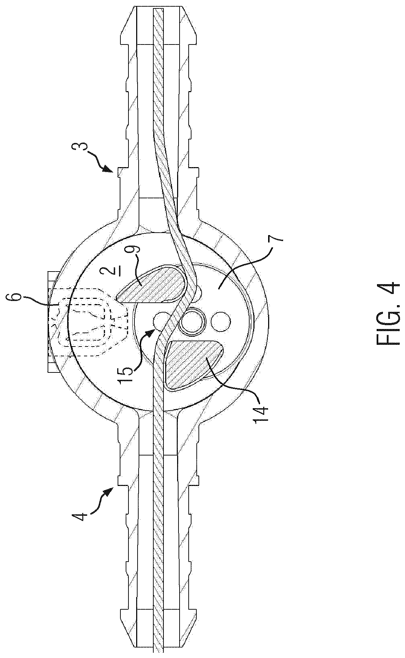

Figure 4 shows the view from Figures 2 and 3. A configuration is shown in which the rotary disk 8 was rotated further towards the second rotary position, in this embodiment clockwise. The deflector 9 and the second deflector 14 are in engagement with the heating line 13 and it can be seen that a section 15 of the heating line 13 has been displaced by engagement with the deflector 9 and the second deflector 14.

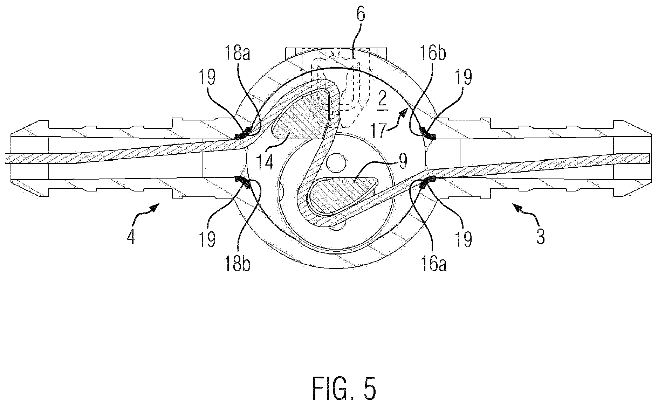

Figure 5 shows the view from Figures 2 to 4. In the configuration shown, the rotary disk 8 was rotated further and is now in the second rotary position in the view shown in Figure 5. In the second rotary position, the deflector 9 is located in the area of the check valve 7. The second deflector 14 is located in the area of the nozzle device 6. In embodiments where only the deflector 9 is provided, it may also be provided that the deflector 9 is located in the second rotary position of the rotary disk 8 in the area of the nozzle device 6.

Figure 5 shows that in the present embodiment, through the engagement with the deflector 9, the heating line 13 also runs in the area of the check valve. Through the arrangement of the second deflector 14, the heating line 13 runs in the area of the nozzle device 7. Due to the displacement of the heating line 13 it contacts an inner wall 17 of the fluid chamber 2 at a transition area 16a between the first fluid port and the fluid chamber 2. At a transition area 18a between the second fluid port 4 and the fluid chamber 2, the heating line 13 also contacts the inner wall 17 of the fluid chamber 2. To avoid possible heat damage or leaks of the fluid chamber 2, a heat protector 19 can be provided at one or more of these transition areas 16a, 18a. This may, for example, have a metal plate or similar. Heat protector 19 may also be provided at other transition areas 16b, 18b.

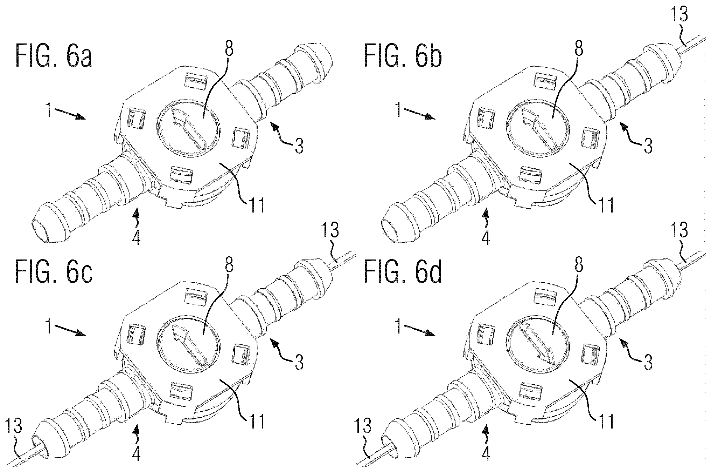

Figures 6a and 6b show a perspective view of a partially assembled fluid chamber assembly 2 in different stages of assembly. Figure 6a shows the fluid chamber assembly 2 without the heating line 13 and the rotary disk 8 is in the first rotary position. In Figure 6b, heating line 13 was inserted into the first fluid port 3. The rotary disk 8 is in the first rotary position. This configuration corresponds to the configuration shown in Figure 2.

In Figure 6c, heating line 13 was guided through fluid chamber 2 and through the second fluid port 4. The rotary disk 8 is still in the first rotary position.

In Figure 6d, the rotary disk 8 was rotated by 180°. This configuration corresponds to the configuration shown in Figure 5.

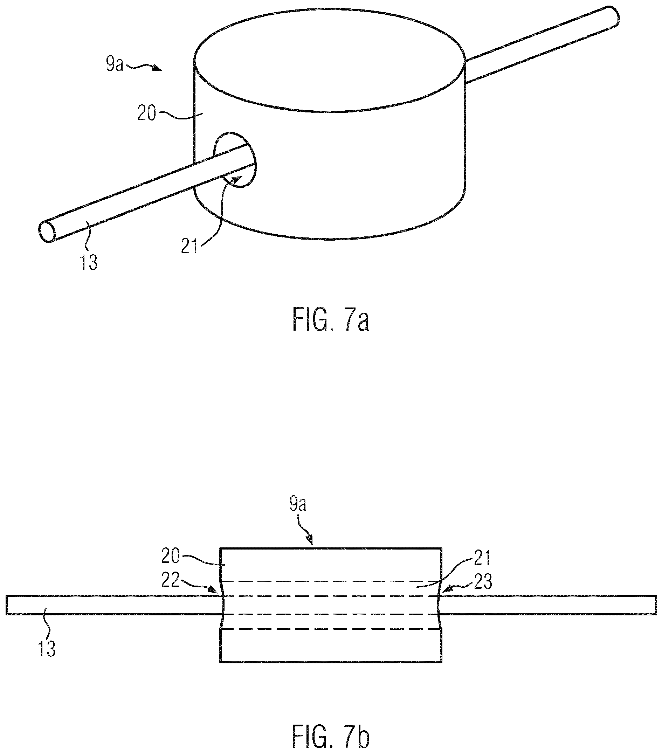

Figure 7a shows another type of deflector 9, which is marked 9a for better clarity. Deflector 9a has a projection of 20 and a channel 21 is provided in projection 20. The heating line 13 runs through the channel 21. The deflector 9a is provided on the rotary disk 8 in such a way that in the first rotary position of the rotary disk 8, the channel 21 is aligned with the fluid ports 3, 4, i.e. that a straight line between the first fluid port 3 and the second fluid port 4 can pass through the channel.

In the second rotary position of the rotary disk 8, channel 21 can be arranged in such a way that a first opening 22 (see Fig. 7b) is arranged in the area of the nozzle device 6. It may also be provided that the first opening 22 of channel 21 is located in the second rotary position of the rotary disk in the area of the check valve 7. It is also conceivable that the first opening 22 of channel 21 is arranged in the second rotary position of the rotary disk 8 in the area of the nozzle device 6 and a second opening 23 (see Fig. 7b) of channel 21 is arranged in the area of the check valve 7 or vice versa.

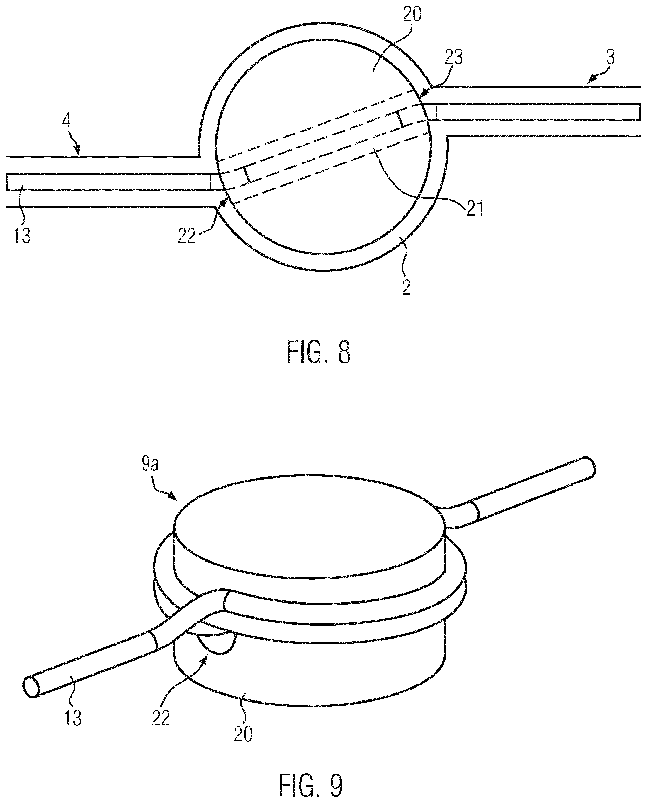

Figure 8 shows a fluid chamber assembly 1a whose fluid ports 3, 4 are offset, i.e. in this case the fluid ports 3, 4 are not arranged collinear to each other and radial to axis 12 as in the previous embodiment. Similar to the previous embodiment, the channel 21 is aligned with the fluid ports 3, 4 in the first rotary position. In this case, however, it follows from the offset arrangement of fluid ports 3, 4 that channel 21 is arranged at an angle greater than 0° to the fluid ports 3, 4. In this way, a section of the heating line 13 can be moved when it is inserted into the fluid chamber 2. Such a displacement when inserting the heating line 13 can also be advantageous in other configurations of fluid chamber assembly 1, 1a, e.g. if only one of the fluid ports 3, 4 is not arranged collinear to the other and/or not radially to axis 12, or if only one fluid port 3, 4 is provided.

The perspective view shown in Figure 8 shows a deflector 9a in an alternative second rotary position. In this example, it is rotated 360° from the first rotary position. The extent of this rotation is given as an example for any size of rotation greater than 45°. As the rotation increases, the section of heating line 13 located in fluid chamber 2 increases. This allows the heating power introduced into the fluid chamber 2 to be increased. It can also be seen that the heating line 13 has been moved in three dimensions.

The effects described with reference to Figure 8 can be achieved by a deflector 9a as described with reference to Figures 7a, 7b and 8. However, it is also possible to achieve all or some of these effects by any deflectors described in the present application, in particular by combining a deflector 9 with a second deflector 14, as described with reference to Figures 2 to 5.

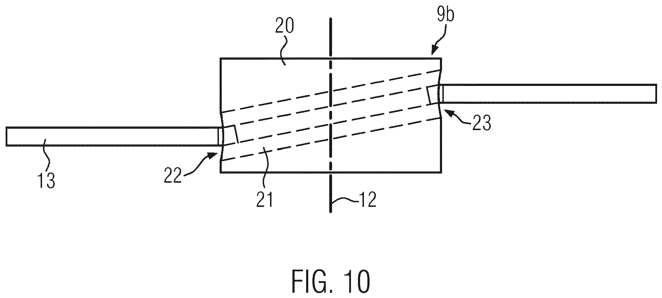

Figure 10 shows another example of a deflector 9b in a schematic sectional view. The deflector 9b of Figure 10, like the deflector 9a described above with reference to Figures 7 to 9, has a channel 21 extending through the deflector 9b. However, it is arranged at an angle to axis 12 which is greater or less than 90°, i.e. not 90°. In this embodiment, too, a displacement of the heating line 13 may be enabled when it is inserted into the fluid chamber 2. In addition, a three-dimensional displacement can be achieved. The arrangement of channel 21 described in Figure 10 can be advantageous for fluid ports 3, 4, which are arranged radially to axis 12 but not collinear to each other.

## Claims

1. Heatable fluid chamber assembly (1) for a window or headlight washer system of a vehicle, comprising:
a fluid chamber (2) having a first fluid port (3),
a heating line (13), arranged in the fluid chamber (2) and preferably arranged in the first fluid port (3),
**characterised in that** it comprises a rotary disk (8), arranged rotatably about an axis (12) in or on the fluid chamber (2) and having a deflector (9), extending into the fluid chamber (2), wherein a portion (15) of the heating line (13) is displaceable by the deflector (9) during a rotation of the rotary disc (8), and wherein the first fluid port (3) extends radially to the axis (12).

2. Heatable fluid chamber assembly according to claim 1, **characterized in that** a second fluid port is provided (4) on the fluid chamber (2), preferably extending radially to the axis (12) and/or collinearly to the first fluid port (3).

3. Heatable fluid chamber assembly according to claim 2, **characterized in that** the heating line (13) runs through the second fluid port (4).

4. Heatable fluid chamber assembly according to claim 2 or 3, **characterized in that** the deflector (9) in a first rotary position of the rotary disk (8) allows for a preferably straight-lined run of the heating line (13) from the first fluid port (3) to the second fluid port (4) and through the fluid chamber (2).

5. Heatable fluid chamber assembly according to one of the preceding claims, **characterized in that** a nozzle unit (6) and/or a check valve is provided in the fluid chamber (2).

6. Heatable fluid chamber assembly according to one of the preceding claims, **characterized in that** in addition to the deflector (9) the rotary disk (8) has a second deflector (14) extending into the fluid chamber (2) and preferably arranged off-centered with respect to the axis (12) at the rotary disk (8).

7. Heatable fluid chamber assembly according to one of the preceding claims, **characterized in that** in a second rotary position, the deflector (9) is arranged in the area of the nozzle unit (6) or of the check valve (7).

8. Heatable fluid chamber assembly according to one of the preceding claims, **characterized in that** the deflector (9) or the deflectors (9, 14) is or are configured to wind up the heating line (13).

9. Method of manufacturing a heatable fluid chamber assembly (1) for a window or headlight washer system of a vehicle, comprising:
providing a fluid chamber (2) having a first fluid port (3),
passing a heating line (13) through the first fluid port (3) into the fluid chamber (2),
**characterized by** deflecting a portion (15) of the heating line (13) by rotating a rotary disk (8) which is arranged rotatably about an axis (12) in or on the fluid chamber (2).

10. Method according to claim 9, **characterized by** passing the heating line (13) through the fluid chamber (2) and a second fluid port (4).

11. Method according to claim 9 or 10, **characterized by** deflecting the portion (15) of the heating line (13) towards a nozzle unit (6) provided inside the fluid chamber (2) and /or towards a check valve (7) provided inside the fluid chamber (2).

12. Method according to one of claims 9 to 11, **characterized in that** by rotation of the rotary disk (8) a deflector (9) arranged at the rotary disk (8) engages the heating line (13).

13. Method according to one of claims 9 to 12, **characterized in that** by rotation of the rotary disk (8) several, preferably two, deflectors (9, 14) arranged at the rotary disk (8) engage the heating line (13), preferably from two opposing sides of the heating line.

14. Method according to one of claims 9 to 13, **characterized by** rotating the rotary disk (8) by an angle exceeding 45 degrees, preferably exceeding 90 degrees, more preferably exceeding 180 degrees, in particular 360 degrees.

15. Method according to claim 14, **characterized by** winding the heating line (13) about the deflector (9) or about the deflectors (9, 14).

## Patentansprüche

1. Beheizbare Flüssigkeitskammeranordnung (1) für eine Scheiben- oder Scheinwerferwaschanlage eines Fahrzeugs, umfassend:
eine Flüssigkeitskammer (2) mit einem ersten Flüssigkeitsanschluss (3),
eine Heizleitung (13), die in der Flüssigkeitskammer (2) und vorzugsweise in dem ersten Flüssigkeitsanschluss (3) angeordnet ist,
**gekennzeichnet durch** eine Drehscheibe (8), die an oder in der Flüssigkeitskammer (2) um eine Achse (12) drehbar angeordnet ist und ein Verlagerungselement (9) aufweist, das sich in die Flüssigkeitskammer (2) hinein erstreckt, wobei ein Abschnitt (15) der Heizleitung (13) bei einer Drehung der Drehscheibe (8) durch das Verlagerungselement (9) verlagerbar ist, und wobei der erste Flüssigkeitsanschluss (3) radial zu der Achse (12) verläuft.

2. Beheizbare Flüssigkeitskammeranordnung nach Anspruch 1, **dadurch gekennzeichnet, dass** an der Flüssigkeitskammer (2) ein zweiter Flüssigkeitsanschluss (4) vorgesehen ist, der vorzugsweise radial zu der Achse (12) und/oder kollinear zu dem ersten Flüssigkeitsanschluss (3) verläuft.

3. Beheizbare Flüssigkeitskammeranordnung nach Anspruch 2, **dadurch gekennzeichnet, dass** die Heizleitung (13) durch den zweiten Flüssigkeitsanschluss (4) verläuft.

4. Beheizbare Flüssigkeitskammeranordnung nach einem der Ansprüche 2 oder 3, **dadurch gekennzeichnet, dass** das Verlagerungselement (9) in einer ersten Drehposition der Drehscheibe (8) einen vorzugsweise geradlinigen Verlauf der Heizleitung (13) von dem ersten Flüssigkeitsanschluss (3) zu dem zweiten Flüssigkeitsanschluss (4) und durch die Flüssigkeitskammer (2) erlaubt.

5. Beheizbare Flüssigkeitskammeranordnung nach einem der vorangehenden Ansprüche, **dadurch gekennzeichnet, dass** in der Flüssigkeitsammer (2) eine Düsenvorrichtung (6) und/oder ein Rückschlagventil (7) vorgesehen ist.

6. Beheizbare Flüssigkeitskammeranordnung nach einem der vorangehenden Ansprüche, **dadurch gekennzeichnet, dass** die Drehscheibe (8) zusätzlich zu dem Verlagerungselement (9) ein zweites Verlagerungselement (14) aufweist, das sich in die Flüssigkeitskammer (2) hinein erstreckt und vorzugsweise mit Bezug auf die Achse (12) exzentrisch an der Drehscheibe (8) angeordnet ist.

7. Beheizbare Flüssigkeitskammeranordnung nach einem der vorangehenden Ansprüche, **dadurch gekennzeichnet, dass** das Verlagerungselement (9) in einer zweiten Drehposition im Bereich der Düsenvorrichtung (6) oder des Rückschlagventils (7) angeordnet ist.

8. Beheizbare Flüssigkeitskammeranordnung nach einem der vorangehenden Ansprüche, **dadurch gekennzeichnet, dass** das Verlagerungselement (9) oder die Verlagerungselemente (9, 14) zum Aufwickeln der Heizleitung (13) konfiguriert ist oder sind.

9. Verfahren zum Herstellen einer beheizbaren Flüssigkeitskammeranordnung (1) für eine Scheiben- oder Scheinwerferwaschanlage eines Fahrzeugs, umfassend:
Vorsehen einer Flüssigkeitskammer (2) mit einem ersten Flüssigkeitsanschluss (3),
Führen einer Heizleitung (13) durch den ersten Flüssigkeitsanschluss (3) in die Flüssigkeitskammer (2) hinein,
**gekennzeichnet durch** Verlagern eines Abschnitts (15) der Heizleitung (13) durch Drehen einer Drehscheibe (8), die um eine Achse (12) drehbar an oder in der Flüssigkeitskammer (2) angeordnet ist.

10. Verfahren nach Anspruch 9, **gekennzeichnet durch** Führen der Heizleitung (13) durch die Flüssigkeitskammer (2) und einen zweiten Flüssigkeitsanschluss (4).

11. Verfahren nach Anspruch 9 oder 10, **gekennzeichnet durch**, Verlagern des Abschnitts (15) der Heizleitung (13) hin zu einer in der Flüssigkeitskammer (2) vorgesehenen Düsenvorrichtung (6) und /oder hin zu einem in der Flüssigkeitskammer (2) vorgesehenen Rückschlagventil (7).

12. Verfahren nach einem der Ansprüche 9 bis 11, **dadurch gekennzeichnet, dass** durch das Drehen der Drehscheibe (8) ein an der Drehscheibe (8) angeordnetes Verlagerungselement (9) in Eingriff mit der Heizleitung (13) gebracht wird.

13. Verfahren nach einem der Ansprüche 9 bis 12, **dadurch gekennzeichnet, dass** durch das Drehen der Drehscheibe (8) mehrere, vorzugsweise zwei, an der Drehscheibe (8) angeordnete Verlagerungselemente (9, 14) vorzugsweise von mindestens zwei gegenüberliegenden Seiten der Heizleitung (13) aus in Eingriff mit der Heizleitung (13) gebracht werden.

14. Verfahren nach einem der Ansprüche 9 bis 13, **gekennzeichnet durch** Drehen der Drehscheibe (8) um einen Winkel, der größer als 45 Grad, vorzugsweise größer als 90 Grad, besonders bevorzugt größer als 180 Grad, insbesondere größer als 360 Grad ist.

15. Verfahren nach Anspruch 14, **gekennzeichnet durch** Aufwickeln der Heizleitung (13) um das Verlagerungselement (9) oder die Verlagerungselemente (9, 14).

## Revendications

1. Ensemble chambre à fluide chauffable (1) pour un système de lave-vitre ou de lave-phare d'un véhicule, comprenant :
une chambre à fluide (2) ayant un premier orifice de fluide (3),
une conduite de chauffage (13), agencée dans la chambre à fluide (2) et de préférence agencée dans le premier orifice de fluide (3),
**caractérisé en ce qu'**il comprend
un disque rotatif (8), agencé en rotation autour d'un axe (12) dans ou sur la chambre à fluide (2) et ayant un déflecteur (9), s'étendant dans la chambre à fluide (2), dans lequel une partie (15) de la conduite de chauffage (13) peut être déplacée par le déflecteur (9) pendant une rotation du disque rotatif (8), et dans lequel le premier orifice de fluide (3) s'étend radialement à l'axe (12).

2. Ensemble chambre à fluide chauffable selon la revendication 1, **caractérisé en ce qu'**un deuxième orifice de fluide (4) est prévu sur la chambre à fluide (2), s'étendant de préférence radialement à l'axe (12) et/ou de manière colinéaire au premier orifice de fluide (3).

3. Ensemble chambre à fluide chauffable selon la revendication 2, **caractérisé en ce que** la conduite de chauffage (13) traverse le deuxième orifice de fluide (4).

4. Ensemble chambre à fluide chauffable selon la revendication 2 ou 3, **caractérisé en ce que** le déflecteur (9) dans une première position de rotation du disque rotatif (8) permet un trajet de préférence rectiligne de la conduite de chauffage (13) depuis le premier orifice de fluide (3) au deuxième orifice de fluide (4) et à travers la chambre à fluide (2).

5. Ensemble chambre à fluide chauffable selon l'une des revendications précédentes, **caractérisé en ce qu'**une unité de buse (6) et/ou une soupape antiretour est/sont prévue(s) dans la chambre à fluide (2).

6. Ensemble chambre à fluide chauffable selon l'une des revendications précédentes, **caractérisé en ce que**, en plus du déflecteur (9), le disque rotatif (8) comporte un deuxième déflecteur (14) s'étendant dans la chambre à fluide (2) et de préférence agencé de manière décentrée par rapport à l'axe (12) au niveau du disque rotatif (8).

7. Ensemble chambre à fluide chauffable selon l'une des revendications précédentes, **caractérisé en ce que**, dans une deuxième position de rotation, le déflecteur (9) est agencé dans la zone de l'unité de buse (6) ou de la soupape antiretour (7).

8. Ensemble chambre à fluide chauffable selon l'une des revendications précédentes, **caractérisé en ce que** le déflecteur (9) ou les déflecteurs (9, 14) est ou sont configuré(s) pour enrouler la conduite de chauffage (13).

9. Procédé de fabrication d'un ensemble chambre à fluide chauffable (1) pour un système de lave-vitre ou de lave-phare d'un véhicule, comprenant :
fournir une chambre à fluide (2) ayant un premier orifice de fluide (3),
faire passer une conduite de chauffage (13) à travers le premier orifice de fluide (3) dans la chambre à fluide (2),
**caractérisé par** la déviation d'une partie (15) de la conduite de chauffage (13) par rotation d'un disque rotatif (8) qui est agencé en rotation autour d'un axe (12) dans ou sur la chambre à fluide (2).

10. Procédé selon la revendication 9, **caractérisé par** le passage de la conduite de chauffage (13) à travers la chambre à fluide (2) et un deuxième orifice de fluide (4).

11. Procédé selon la revendication 9 ou 10, **caractérisé par** la déviation de la partie (15) de la conduite de chauffage (13) vers une unité de buse (6) prévue à l'intérieur de la chambre à fluide (2) et/ou vers une soupape antiretour (7) prévue à l'intérieur de la chambre à fluide (2).

12. Procédé selon l'une des revendications 9 à 11, **caractérisé en ce que**, par la rotation du disque rotatif (8), un déflecteur (9) agencé au niveau du disque rotatif (8) s'engage avec la conduite de chauffage (13).

13. Procédé selon l'une des revendications 9 à 12, **caractérisé en ce que**, par la rotation du disque rotatif (8), plusieurs, de préférence deux, déflecteurs (9, 14) agencés au niveau du disque rotatif (8) s'engagent avec la conduite de chauffage (13), de préférence à partir de deux côtés opposés de la conduite de chauffage.

14. Procédé selon l'une des revendications 9 à 13, **caractérisé par** la rotation du disque rotatif (8) d'un angle dépassant 45 degrés, de préférence dépassant 90 degrés, plus préférentiellement dépassant 180 degrés, en particulier de 360 degrés.

15. Procédé selon la revendication 14, **caractérisé par** l'enroulement de la conduite de chauffage (13) autour du déflecteur (9) ou autour des déflecteurs (9, 14).
